# EUROPEAN PATENT SPECIFICATION

(11) **EP 4 083 339 B1**
(45) Date of publication and mention of the grant of the patent: **13.03.2024**
(21) Application number: 22170933.0
(22) Date of filing: 29.04.2022
(51) Int. Cl.: E03D 1/14, G01F 23/18, G01F 23/292, G01F 23/80, G01F 25/20

(54) **FLUSHING TANK WITH A CONTROL SYSTEM BASED ON LEVEL MEASUREMENTS**
SPÜLTANK MIT EINEM AUF FÜLLSTANDSMESSUNGEN BASIERENDEN KONTROLLSYSTEM
RÉSERVOIR DE RINÇAGE DOTÉ D'UN SYSTÈME DE COMMANDE BASÉ SUR DES MESURES DE NIVEAU

(30) Priority: 30.04.2021 IT 202100011069
(43) Date of publication of application: 02.11.2022
(73) Proprietor: OLI - SISTEMAS SANITARIOS, S.A., 3800-314 Aveiro (PT)
(72) Inventor: SILVA PEREIRA, Marcelo, 3800-314 AVEIRO (PT); BATISTA CRUZ, Pedro Miguel, 3800-314 AVEIRO (PT)
(74) Representative: Studio Torta S.p.A.

(56) References cited:
- EP-A2- 1 156 166
- EP-A2- 1 426 502
- WO-A1-2019/239370
- AT-A4- 506 791
- DE-A1- 10 222 193

## Description

### CROSS-REFERENCE TO RELATED APPLICATIONS

This Patent Application claims priority from Italian Patent Application No. 102021000011069 filed on April 30, 2021.

### TECHNICAL FIELD OF THE INVENTION

The present invention relates to a flushing tank for sanitary appliances, which is provided with a control system based on level measurements.

### STATE OF THE ART

As is known, a flushing tank of a sanitary appliance contains a certain amount of water, which reaches a certain level in the cistern; when the water contained in the cistern is flushed, by means of a suitable flush valve, the water level is restored by feeding water into the cistern through a feeding device connected to the water mains. When the preset level is reached, the filling device, for example operated by a float, stops the water supply.

Especially in order to avoid waste and reduce water consumption, there is a need to carefully check the amount of water in the cistern, so as to detect any leaks, monitor consumption, etc.

In general, the most flushing tanks are not equipped with water level measuring devices. In e.g. documents AT 506 791 A4, WO 2019/239370 A1 and EP 1 156 166 A2 the water level in the tank can be measured. Document EP 1 156 166 A2 discloses all the features in the preamble of attached independent claim 1.

On the other hand, placing level sensors inside a flushing tank poses major problems.

In particular, there are problems of installation and accessibility, also for maintenance and inspection, since the inside of the flushing tanks is normally not very accessible; problems in supplying the sensors; problems in transmitting the data detected by the sensors outside the cistern.

A particularly important problem is the need to keep the level sensor calibrated. In general, level sensors require periodic calibration to be fully efficient and reliable. But calibration requires operator intervention.

The object of the present invention is to solve the above-mentioned problems, in particular the problem of remote monitoring and controlling a flushing tank for sanitary appliances.

The object of the invention is also to solve the problem of having an intelligent universal system that, regardless of the installation, can adapt and self-adjust to the installation conditions without the need for physical modifications to the installation product by the skilled personnel.

### SUBJECT AND SUMMARY OF THE INVENTION

Therefore, the present invention relates to a flushing tank for sanitary appliances, which is provided with a control system based on level measurements, as essentially defined in the appended claim 1 and, in its additional features, in the dependent claims.

The flushing tank of the invention allows a plurality of functions, such as controlling the amount of water discharged, monitoring the operating state of the cistern, generating alarms related to the state of the cistern, etc.

The flushing tank of the invention is provided with a sensor assembly, which detects the water level in the cistern, and a control unit, which receives the data from the sensor assembly and controls the discharge. The control unit can also provide a number of other functions, thus communicating the current and past states of the cistern, particularly using wireless protocols, to a remote server which stores and processes the data.

The operating parameters of the flushing tank, such as the volume and flow rate of the discharged water, and other accessory features such as the closing speed of the flush valve, can also be modified through bidirectional communication with the server. In addition, the flushing can also be activated and monitored remotely.

The invention finds application in different models of flushing tanks, by self-adjusting the performance and adapting to different installation conditions without requiring operator intervention.

The actuator assembly operating the flush valve allows full and precise control of all stages of opening and closing of the flush valve. The amount of water discharged can be based on the water level data detected by the sensor assembly, so that the flush valve does not need most of the classic components, which greatly simplifies the design and manufacture.

Optionally, an online platform can allow the user to access the state of the cistern, the usage history, and the remote mode of configuration and operation of the cistern.

The invention can communicate data to an external unit, for example, for monitoring the current and past states of the flushing tank. For example, the data detected by the unit are transmitted to a server which logs the cistern's operating data: the unit detects the discharge volume of the cistern, provides detection of any leaks and other malfunctions, and communicates the data to an online platform which then provides various analysis functions such as predictive maintenance and life cycle monitoring, water usage logging and analysis, automatic maintenance alerts, etc.

The sensor assembly has its own on-board electronics and uses two different pressure sensors (or a differential pressure sensor) to calculate the water level, which are fitted to the top of the sensor assembly. One of the sensors reads the atmospheric pressure and the second one reads the pressure at the bottom of the cistern. Advantageously, the sensor monitoring the pressure at the bottom of the cistern can be positioned above the water level by a flexible, fully sealed pipe connected to the sensor. The lower end of the pipe is located near the bottom of the cistern. This configuration allows the pressure exerted by the air inside the pipe to be read.

In addition, there are two optical sensors, one near the maximum water level in the cistern and another immersed near the bottom wall of the cistern, with a known distance between them, to allow automatic calibration of the pressure sensor.

Advantageously, the sensor assembly has a support body which is articulated so as to allow insertion into a cistern through the normal inspection opening of the cistern. The system of the invention thus allows universal installation, in all kinds of flushing tanks (built-in, external, ceramic, etc.), and can also be easily installed into and removed from any type of cistern.

Advantageously, moreover, all the electrical/electronic parts of the sensor assembly and of the actuator assembly can be equipped with an IP67 equivalent protection.

### BRIEF DESCRIPTION OF THE DRAWINGS

Further features and advantages of the present invention will be apparent from the following description of a non-limiting embodiment thereof, with reference to the figures of the accompanying drawings, wherein:
- Figure 1 is a front perspective view of a flushing tank for sanitary appliances, which is provided with a control system based on level measurements according to the invention;
- Figure 2 is a longitudinal sectional view, with parts removed for clarity, of the flushing tank in Figure 1;
- Figure 3 is a front view of a detail of the flushing tank in Figure 1;
- Figure 4 is an exploded perspective view of the detail in Figure 3;
- Figure 5 is a perspective view of a further detail of the flushing tank in Figure 1;
- Figure 6 is an exploded perspective view, with parts removed for clarity, of the detail in Figure 5;
- Figure 7 is a perspective view of a further detail of the flushing tank in Figure 1.

### DETAILED DESCRIPTION OF PREFERRED EMBODIMENTS OF THE INVENTION

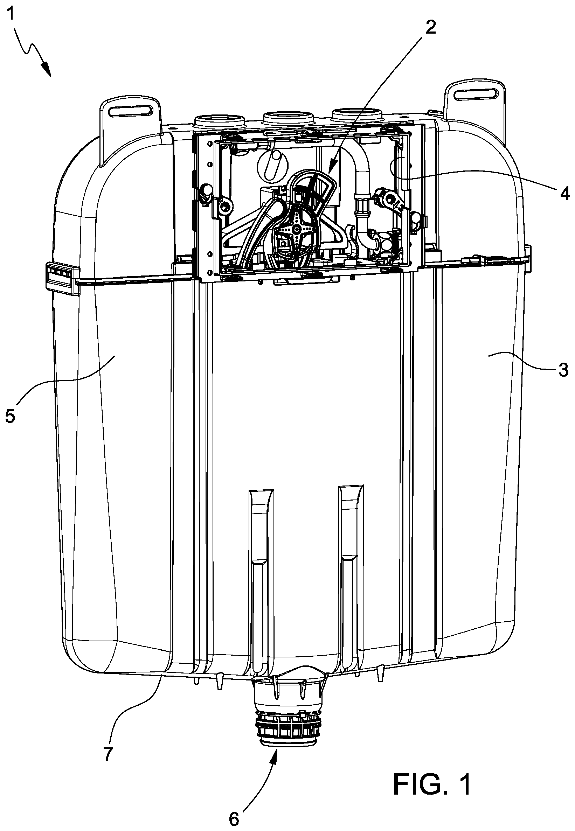

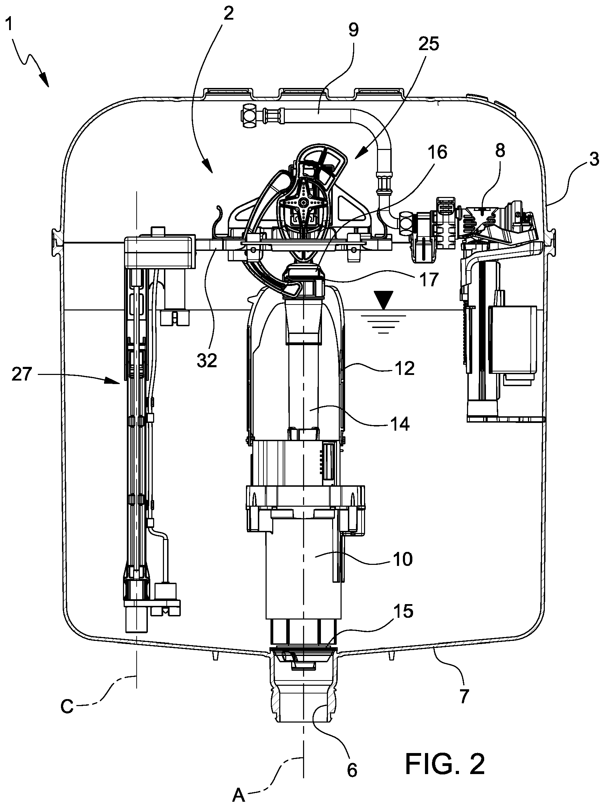

Number 1 in Figures 1 and 2 indicates, as a whole, a flushing tank 1 for a sanitary appliance, in particular of the built-in type, equipped with a flush control system 2.

The tank 1 may be of any known type.

In general, the tank 1 comprises a cistern 3 having an inspection opening 4, formed in a front wall 5 of the cistern 3, and a drainage hole 6 formed through a bottom wall 7 of the cistern 3.

The opening 4 is closed, as known, by a control plate (known and not shown) which typically defines an interface that can be operated by a user.

The cistern 3 houses a filling valve 8, connected to a supply pipe 9 for connection to a water mains, and a flush valve 10, controlled by the control system 2.

The filling valve 8 can be of any known type, for example, a filling valve operated by a float.

The flush valve 10 comprises a support structure 12, fixed to the cistern 3, and a shutter member 14 extending along a longitudinal axis A and movable along the axis A in the support structure 12 and cooperating with the drainage hole 6 to selectively open and close the drainage hole 6.

The shutter member 14 extends along the axis A between a lower end 15, provided with a gasket cooperating with the drainage hole 6, and an upper end 16, provided with a head 17 connected to the control system 2.

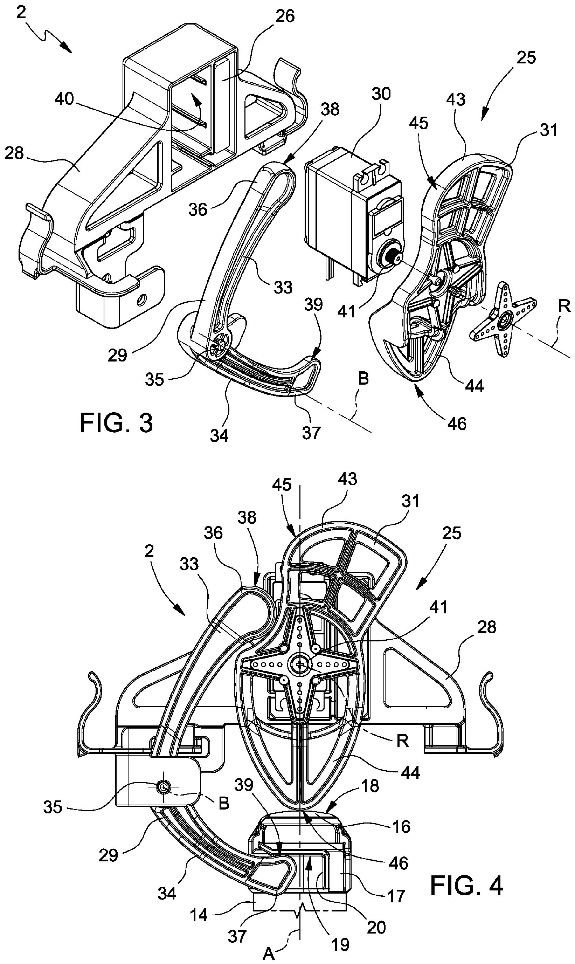

As shown in Figure 3, the head 17 has an upper contact surface 18, for example substantially convex and facing upwards; and a lower contact surface 19, opposite the upper contact surface and facing downwards and defined, for example, by a hollow seat 20 formed in the head 17.

Also, with reference to Figures 3 and 4, the control system 2 comprises an actuator assembly 25, cooperating with the flush valve 10; a control unit 26; and a sensor assembly 27.

The actuator assembly 25 comprises a support 28, an oscillating lever 29 hinged to the support 28, a motor 30, a cam actuator 31 driven by the motor 30 and cooperating with the lever 29.

The support 28, for example fixed to the cistern 3 by means of a bracket 32 (Figure 2), supports the lever 29 and houses the motor 30 and the control unit 26.

The lever 29, for example, is substantially C-shaped and has an upper arm 33 and a lower arm 34, projecting divergent from one another from a fulcrum 35 hinged to the support 28 and defining a rotation axis B of the lever 29.

The arms 33, 34 have respective free ends 36, 37 provided with respective contact surfaces 38, 39 cooperating with the actuator 31 and, respectively, with the seat 20 formed in the head 17 of the shutter member 14 and precisely with the contact surface 19 of the seat 20.

The motor 30 is, for example, an electric servomotor and is housed in a housing 40 formed in the support 28; the motor 30 has a shaft 41 rotating about a rotation axis R which extends out of the housing 40 and on which the actuator 31 is keyed. The motor 30 is configured so as to rotate the shaft 41 in opposite directions of rotation, controlled by the control unit 26.

The actuator 31 is fitted to the shaft 41 and can rotate integrally with the shaft 41 about the axis R in opposite directions of rotation (clockwise and anticlockwise).

The actuator 31 is a cam actuator with an eccentric shape with respect to the axis R. In particular, the actuator 31 comprises two cam portions 43, 44, which are eccentric with respect to the axis R (i.e., with respect to the shaft 41 of the motor 30): the cam portion 43 has a first contact surface 45, cooperating with the contact surface 38 of the upper arm 36 of the lever 29; and the cam portion 44 has a second contact surface 46, cooperating with the contact surface 18 of the head 17 of the shutter member 14.

The cam portion 43 and the contact surface 45 are located above the axis R; the contact surface 45 is substantially S-shaped and contacts the contact surface 38 of the lever 29 so as to push the arm 36 of the lever 29 and rotate the lever 29 with respect to the fulcrum 35.

The cam portion 44 and the contact surface 46 are located below the axis R and the contact surface 46 rests against the contact surface 18 of the head 17 of the shutter member 14 to axially push the shutter member 14 downwards (along the axis A).

The actuator 31, the lever 29, and the shutter member 14 are shaped so that, in any position that the actuator 31 assumes in use, the contact surfaces 45, 46 of the actuator 31 are always in contact with the contact surface 38 of the lever 29 and the contact surface 18 of the shutter member 14, respectively; and so that the contact surfaces 38, 39 of the lever 29 are always in contact with the contact surface 45 of the actuator 31 and the contact surface 19 of the shutter member 14, respectively.

The control unit 26, for example a printed circuit electronic board, is connected to the motor 30 to control the operation of the motor 30 and, therefore, the movement of the actuator 31; and to the sensor assembly 27 to receive and process signals therefrom. The control unit 26 is advantageously sealed in a fluid-tight manner inside the support 28.

The control unit 26 is provided with a wireless device to exchange (receive and transmit) data with the outside. In particular, the control unit 26 communicates with a control plate (known and not shown), for example positioned to close the inspection opening 4, which sends the command to activate the discharge (given manually by a user or automatically by means of presence sensors or otherwise); and with a remote server, which stores and processes the operating data of the tank 1.

The control unit 26 controls the actuator assembly 25 according to the data received from the sensor assembly 27; in particular, the control unit 26 receives and processes the measurements of the water level in the cistern 3 supplied by the sensor assembly 27 and activates the actuator assembly 25 to control the discharge.

In the example shown, the control unit 26 is installed inside the tank 1 (in particular in the support 28 of the actuator assembly 25), but it is understood that the control unit 26 can also be located in another position; for example, the control unit 26 can be integrated into the control plate which, as known, closes the inspection opening 4.

The sensor assembly 27 is configured to detect the level of the water contained in the tank 1 and communicate it to the control unit 26.

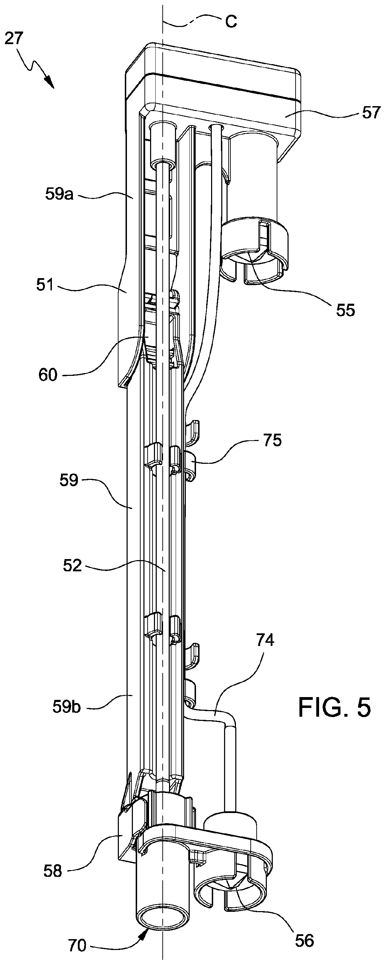

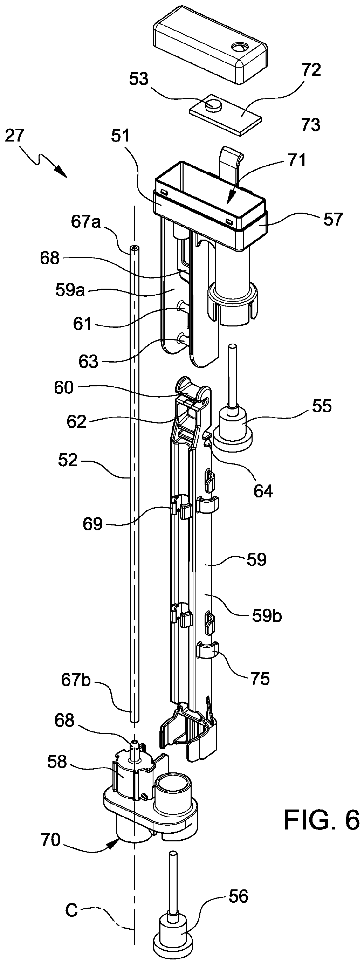

Also, with reference to Figures 5 and 6, the sensor assembly 27 comprises a support body 51; a pipe 52 supported by the support body 51 and extending along an axis C; at least one pressure sensor 53; a pair of optical sensors 55, 56 positioned spaced apart from each other on the support body 51.

The support body 51 comprises a top portion 57 and a bottom portion 58, positioned at respective axially opposite ends of the support body 51, and a bar 59 extending between the portions 57, 58.

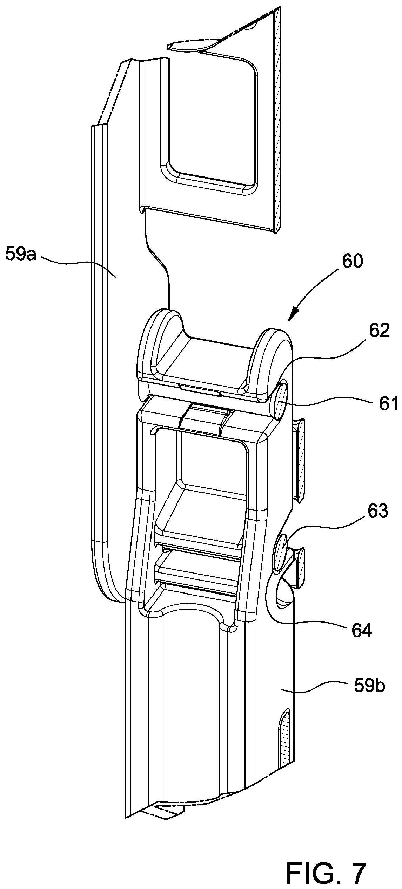

Preferably, the bar 59 is made up of two sectors 59a, 59b articulated to each other by a hinge 60 (shown in detail in Figure 7), so that the bar 59 can bend by bending the two sectors 59a, 59b with respect to each other. In this way, if necessary, the articulated bar 59 allows easy insertion of the sensor assembly 27 through the inspection opening 4.

In particular, the hinge 60 comprises a pin 61 which engages a rotation seat 62, carried by respective sectors 59a, 59b; and a stop member 63 which engages an abutment seat 64, formed on respective sectors 59a, 59b to limit the rotation of the sectors 59a, 59b with respect to each other.

Advantageously, the two sectors 59a, 59b can also be separated from each other, releasing the stop member 63 from the abutment seat 64 and removing the pin 61 from the rotation seat 62.

The pipe 52, for example, is a flexible pipe, open at the lower end and connected at the top directly to the pressure sensor 53.

In particular, the pipe 52 has opposite, open axial ends 67a, 67b and extends between the portions 57, 58 to which it is fixed, for example, by means of respective joints 68 inserted in the axial ends 67a, 67b. Optionally, the pipe 52 is also fixed to the bar 59 by means of snap-on coupling elements 69.

The opposite axial ends 67a, 67b communicate with an inlet 70 formed in the portion 58 and with an inner chamber 71 of the portion 57, respectively.

The chamber 71 houses the pressure sensor 53 and an electronic board 72 which controls the pressure sensor 53 and the optical sensors 55, 56. Advantageously, the chamber 71 is sealed in a liquid-tight manner, so as to have at least an IP67 equivalent degree of protection.

The pressure sensor 53 is positioned at the upper axial end 67a of the pipe 52 and closes the axial end 67a; the pipe 52 is sealed in a fluid-tight manner, as it is only open at the lower axial end 67b.

The pressure sensor 53 is configured so as to detect the atmospheric pressure and the pressure acting on the pressure sensor 53 through the pipe 52, that is, the pressure of the fluid column inside the pipe 52 (the air in the pipe 52, pushed by the water rising in the pipe 52), to determine the water level inside the tank 1 (i.e., the cistern 3).

For example, the sensor pressure 53 has a flexible membrane sensitive to pressure changes acting on the membrane, and an integrated microprocessor, which detects membrane displacements due to the pressure changes and translates them into signals which are sent to the electronic board 72.

In a preferred embodiment, the pressure sensor 53 is a differential pressure sensor, configured so as to measure the atmospheric pressure and the pressure of the fluid column in the pipe 52 and calculate the difference between the two values to calculate the water level in the tank 1.

In a variant, the sensor assembly 27 comprises a pair of pressure sensors 53 configured so as to detect the pressure acting on the sensors 53 to calculate the water level in the tank 1. In particular, each sensor 53 has a flexible membrane sensitive to pressure changes acting on the membrane, and an integrated microprocessor, which detects membrane displacements due to the pressure changes and translates them into signals which are sent to the electronic board 72. A first sensor 53 detects the atmospheric pressure, as it is positioned above the water filling level of the tank 1 with the membrane exposed to atmospheric air; a second sensor 53 detects the pressure at the bottom of the cistern 3 and is immersed in the water contained in the cistern 3, or is arranged at the upper end 67a of the pipe 52 in contact with the air column inside the pipe 52.

Advantageously, both sensors 53 are in any case located in the top portion 57 of the sensor assembly 27, above the filling level of the tank 1, and the pressure at the bottom of the cistern 3 is detected, as described above, through the fluid column in the pipe 52 directly in contact with one of the sensors 53.

In this case too, the sensors 53 are configured so as to calculate the water level in the tank 1 by means of differential pressure values detected by the first sensor 53, exposed to atmospheric pressure, and by the second sensor 53, in contact with the column of air contained in the pipe 52.

The support body 51 is provided with a hook 73, or other fastening element, for fixing the support body 51 and therefore the sensor assembly 27 as a whole inside the cistern 3. For example, the hook 73 extends from a side wall of the portion 57 and engages a corresponding seat (not shown) formed inside the cistern 3.

The optical sensors 55, 56 are positioned on the support body 51 axially spaced apart from each other. For example, the optical sensors 55, 56 are positioned on the portion 57 and the portion 58, respectively.

The optical sensors 55, 56 face downwards, i.e., towards the bottom wall 7 of the tank 1, so as to detect the water level below them.

The optical sensors 55, 56 are, for example, optical sensors of the on-off type which emit infrared radiation to detect the presence of liquid in the respective position (height).

The optical sensors 55, 56 are connected to the electronic board 72, for example, by means of cables 74. In particular, the lower optical sensor 56 is connected to the electronic board 72 by a cable 74 which is optionally guided by a plurality of fasteners 75 positioned along the bar 59.

Advantageously, in order to adapt the sensor assembly 27 to different models of flushing tanks, the sensor assembly 27 has an upper part (formed by the portion 57 and by the first sector 59a of the bar 59) common to all models, and a lower part (formed by the portion 58 and by the sector 59b) which is made according to the tank 1 to be equipped, and in particular with a sector 59b of different lengths to adapt to different cisterns 3, so as to keep the lower optical sensor 56 as close as possible to the bottom wall 7 of the cistern 3.

In general, the support body 51 is shaped so that the optical sensor 56 is positioned close to the bottom wall 7 of the cistern 3; whereas the optical sensor 55 and the pressure sensor 53 are positioned above the normal maximum filling level of the cistern 3 (Figure 2).

In use, the water level in the cistern 3 is measured by the sensor assembly 27: the water contained in the cistern 3 also enters the pipe 52 through the inlet 65 and compresses the air column inside the pipe 52. The pressure sensor 53 measures the pressure of the air column inside the pipe 52 and therefore the pressure at the bottom of the cistern 3, from which the water level in the cistern 3 is obtained.

The optical sensors 55, 56 detect the presence of liquid in two predetermined spatial positions and thus enable the pressure sensor 53 to be calibrated in two known reference operating conditions.

In order to activate the flush, the control unit 26 controls the motor 30 which rotates the actuator 31.

A rotation in a first direction of rotation (in the example shown, anticlockwise) moves the lever 29 (by contact between the contact surface 45 of the actuator 31 and the contact surface 38 of the lever 29) in order to raise the arm 34 and consequently raise the shutter member 14 (by contact between the contact surface 39 of the lever 29 and the contact surface 19 of the shutter member 14), thereby opening the flush valve; a rotation in the opposite direction (in the example shown, clockwise) returns the lever 29 to the initial position and at the same time pushes the shutter member 14 downwards (by contact between the contact surface 46 of the actuator 31 and the contact surface 18 of the shutter member 14), thereby closing the flush valve 10.

The combined use of the pressure sensor 53 and the two optical sensors 55, 56 allows the sensor assembly 27 to accurately detect the liquid level and to self-calibrate without external intervention.

In particular, the optical sensors 55, 56 detect whether the cistern 3 is full or empty, i.e., whether the cistern 3 contains water at two predetermined reference levels: if the upper optical sensor 55 detects the presence of water in its position, the cistern 3 is full; if the optical sensor 56 does not detect water below it, the cistern 3 is empty.

The optical sensors 55, 56 communicate to the electronic board 72 when the cistern 3 is full or empty and the electronic board 72 can accordingly calibrate the pressure sensor 53 whenever it is necessary (for example, after each emptying and filling cycle of the tank 1) . The pressure sensor 53 is thus constantly calibrated, without the need to carry out a calibration with the intervention of an operator.

In this way, the sensor assembly 27 is completely autonomous and does not require periodic manual calibrations.

The user can read the level values at any time and with high precision, with an indicative tolerance of +/- 0.2 mm.

The sensor assembly 27 can thus operate with high durability and provide data on any problems and malfunctions, such as leaks, overfilling, flush valve malfunctions, overflow events, and provide measurements of water consumption, performance, etc.

It is understood that numerous modifications and variations can be made to the flushing tank as described and illustrated herein without departing from the scope of the claims appended hereto.

## Claims

1. A flushing tank (1) comprising a cistern (3), a flush valve (10) having a shutter member (14) movable to selectively open and close a drainage hole (6), and a control system (2) for controlling the flush valve (10); the control system (2) comprising an actuator assembly (25) cooperating with the shutter member (14) of the flush valve (10), a control unit (26) controlling the actuator assembly (25), and a sensor assembly (27) connected to the control unit (26) for sending to the control unit (26) measures of the water level in the cistern (3); the sensor assembly (27) comprising a support body (51) supporting at least one pressure sensor (53) configured for measuring a water level in the cistern (3); the flushing tank being **characterized in that** the sensor assembly further comprises a pair of optical sensors (55, 56) positioned spaced apart from each other on the support body (51) at different heights with respect to a bottom wall (7) of the cistern (3); the control unit (26) being configured so as to calibrate the pressure sensor (53) according to data provided by the optical sensors (55, 56).

2. The flushing tank according to claim 1, wherein the optical sensors (55, 56) are configured so as to detect the presence of liquid in two predetermined spatial positions and in respective reference operating conditions; and the control unit (26) is configured so as to calibrate the pressure sensor (53) according to the data provided by the optical sensors (55, 56) in the two reference operating conditions.

3. The flushing tank according to claim 1 or 2, wherein the pressure sensor (53) is positioned at an upper axial end (67a) of a pipe (52) supported by the support body (51) and having a lower axial end (67b) which is open and in fluid communication, in use, with the cistern (3); the pressure sensor (53) being configured so as to detect the pressure of a fluid column inside the pipe (52) and accordingly calculate the level of water in the cistern (3).

4. The flushing tank according to claim 3, wherein the pressure sensor (53) is a differential pressure sensor, configured so as to measure the atmospheric pressure and the pressure of the fluid column in the pipe (52) and use the difference between the two values to calculate the level of liquid in the tank (1).

5. The flushing tank according to claim 3 or 4, wherein the support body (51) comprises a top portion (57) and a bottom portion (58), positioned at respective axially opposite ends of the support body (51), and a bar (59) extending between said portions (57, 58) and made up of two sectors (59a, 59b) articulated to each other by a hinge (60) so that the two sectors (59a, 59b) rotate with respect to each other to facilitate insertion of the sensor assembly (27) through an access opening of the cistern (3).

6. The flushing tank according to any one of the preceding claims, wherein the first optical sensor (55) and the pressure sensor (53) are positioned above the maximum filling level of the cistern (3), and the second optical sensor (56) is positioned in proximity to the bottom wall (7) of the cistern (3).

7. The flushing tank according to any one of the preceding claims, wherein the actuator assembly (25) comprises a support (28), an oscillating lever (29) hinged to the support (28), a motor (30), a cam actuator (31) fitted to a shaft (41) of the motor (30) and rotating integrally with the shaft (41) and cooperating with the lever (29); and wherein the motor (30) is configured so as to rotate the shaft (41) and thus the actuator (31) in opposite directions of rotation, controlled by the control unit (26).

8. The flushing tank according to claim 7, wherein the actuator (31) comprises two cam portions (43, 44) eccentric with respect to a rotation axis (R) of the shaft (41) and cooperating with the lever (29) and with a head (17) of the shutter member (14), respectively.

9. The flushing tank according to claim 7 or 8, wherein the actuator (31) is movable in a first direction of rotation to move the lever (29), by contact between respective first contact surfaces (45, 38) of the actuator (31) and of the lever (29), so that the lever (29) rises the shutter member (14) by contact between respective second contact surfaces (39, 19) of the lever (29) and of the shutter member (14), opening the flush valve (10); and in a second direction of rotation, opposite to the first direction of rotation, to move the shutter member (14) downwards by contact between respective third contact surfaces (46, 18) of the actuator (31) and of the shutter member (14), closing the flush valve (10).

10. The flushing tank according to any one of claims 7 to 9, wherein the lever (29) is substantially C-shaped and has an upper arm (33) and a lower arm (34) projecting divergent from one another from a fulcrum (35) hinged to the support (28); the arms (33, 34) having respective free ends (36, 37) provided with respective contact surfaces (38, 39) cooperating with the actuator (31) and the shutter member (14), respectively.

11. The flushing tank according to any one of claims 7 to 10, wherein the actuator (31), the lever (29) and the shutter member (14) are shaped so that, in any position that the actuator (31) assumes in use, the contact surfaces (45, 46) of the actuator (31) are always in contact with the respective contact surfaces (38, 18) of the lever (29) and of the shutter member (14); and so that the contact surfaces (38, 39) of the lever (29) are always in contact with the respective contact surfaces (45, 19) of the actuator (31) and of the shutter member (14).

12. The flushing tank according to any one of the preceding claims, wherein the control unit (26) is provided with a wireless device for exchange of data with the outside.

## Patentansprüche

1. Spülkasten (1) aufweisend eine Zisterne (3), ein Spülventil (10) mit einem Verschlusselement (14), das beweglich ist, um ein Abflussloch (6) selektiv zu öffnen und zu schließen, und ein Steuersystem (2) zum Steuern des Spülventils (10); wobei das Steuersystem (2) eine Betätigungsanordnung (25), die mit dem Verschlusselement (14) des Spülventils (10) zusammenwirkt, eine Steuereinheit (26), die die Betätigungsanordnung (25) steuert, und eine Sensoranordnung (27) umfasst, die mit der Steuereinheit (26) verbunden ist, um Messungen des Wasserstands in der Zisterne (3) an die Steuereinheit (26) zu senden; wobei die Sensoranordnung (27) einen Trägerkörper (51) umfasst, der zumindest einen Drucksensor (53) trägt, der zum Messen eines Wasserpegels in der Zisterne (3) eingerichtet ist; wobei der Spülkasten **dadurch gekennzeichnet ist, dass** die Sensoranordnung ferner ein Paar optischer Sensoren (55, 56) umfasst, die voneinander beabstandet auf dem Trägerkörper (51) in unterschiedlichen Höhen in Bezug auf eine Bodenwand (7) der Zisterne (3) angeordnet sind; wobei die Steuereinheit (26) eingerichtet ist, den Drucksensor (53) gemäß den von den optischen Sensoren (55, 56) bereitgestellten Daten zu kalibrieren.

2. Spülkasten nach Anspruch 1, wobei die optischen Sensoren (55, 56) eingerichtet sind, das Vorhandensein von Flüssigkeit in zwei vorbestimmten räumlichen Positionen und in jeweiligen Referenzbetriebsbedingungen zu erfassen; und die Steuereinheit (26) eingerichtet ist, den Drucksensor (53) entsprechend den von den optischen Sensoren (55, 56) in den beiden Referenzbetriebsbedingungen gelieferten Daten zu kalibrieren.

3. Spülkasten nach Anspruch 1 oder 2, wobei der Drucksensor (53) an einem oberen axialen Ende (67a) eines Rohrs (52) angeordnet ist, das von dem Trägerkörper (51) getragen wird und ein unteres axiales Ende (67b) aufweist, das offen ist und im Gebrauch in Fluidverbindung mit der Zisterne (3) steht; wobei der Drucksensor (53) eingerichtet ist, den Druck einer Fluidsäule im Inneren des Rohrs (52) zu erfassen und dementsprechend den Wasserstand in der Zisterne (3) zu berechnen.

4. Spülkasten nach Anspruch 3, wobei der Drucksensor (53) ein Differenzdrucksensor ist, der eingerichtet ist, den atmosphärischen Druck und den Druck der Flüssigkeitssäule in dem Rohr (52) zu messen und die Differenz zwischen den beiden Werten zur Berechnung des Flüssigkeitsstands im Spülkasten (1) zu verwenden.

5. Spülkasten nach Anspruch 3 oder 4, wobei der Trägerkörper (51) einen oberen Abschnitt (57) und einen unteren Abschnitt (58), die an den jeweiligen axial gegenüberliegenden Enden des Trägerkörpers (51) angeordnet sind, und eine Stange (59) umfasst, die sich zwischen den Abschnitten (57, 58) erstreckt und durch zwei Sektoren (59a, 59b) gebildet ist, die mittels eines Scharniers (60) gelenkig miteinander verbunden sind, so dass sich die beiden Sektoren (59a, 59b) in Bezug zueinander drehen, um das Einführen der Sensoranordnung (27) durch eine Zugangsöffnung der Zisterne (3) zu erleichtern.

6. Spülkasten nach einem der vorhergehenden Ansprüche, wobei der erste optische Sensor (55) und der Drucksensor (53) oberhalb des maximalen Füllstands der Zisterne (3) angeordnet sind und der zweite optionale Sensor (56) in der Nähe der Bodenwand (7) der Zisterne (3) angeordnet ist.

7. Spülkasten nach einem der vorhergehenden Ansprüche, wobei die Betätigungsanordnung (25) einen Träger (28), einen schwingenden Hebel (29), der gelenkig mit dem Träger (28) verbunden ist, einen Motor (30) und ein Betätigungselement (31) umfasst, das an einer Welle (41) des Motors (30) angebracht ist und sich integral mit der Welle (41) dreht und mit dem Hebel (29) zusammenwirkt; und wobei der Motor (30) eingerichtet ist, die Welle (41) und damit das Betätigungselement (31) in entgegengesetzten Drehrichtungen zu drehen, gesteuert durch die Steuereinheit (26).

8. Spülkasten nach Anspruch 7, wobei das Betätigungselement (31) zwei Nockenabschnitte (43, 44) umfasst, die in Bezug auf eine Drehachse (R) der Welle (41) exzentrisch sind und mit dem Hebel (29) bzw. mit einem Kopf (17) des Verschlusselements (14) zusammenwirken.

9. Spülkasten nach Anspruch 7 oder 8, wobei das Betätigungselement (31) in einer ersten Drehrichtung bewegbar ist, um den Hebel (29) und die jeweiligen ersten Kontaktflächen (45, 31) des Hebels (29) zu bewegen, so dass der Hebel (29) das Verschlusselement (14) durch Kontakt zwischen den jeweiligen zweiten Kontaktflächen (39, 19) des Hebels (29) und des Verschlusselements (14) anhebt und das Spülventil (10) öffnet; und in einer zweiten Drehrichtung, die der ersten Drehrichtung entgegengesetzt ist, das Verschlusselement (14) durch Kontakt zwischen entsprechenden dritten Kontaktflächen (46, 18) des Betätigungselements (31) und des Verschlusselements (14) nach unten zu bewegen, wodurch das Spülventil (10) geschlossen wird.

10. Spülkasten nach einem der Ansprüche 7 bis 9, wobei der Hebel (29) im Wesentlichen C-förmig ist und einen oberen Arm (33) sowie einen unteren Arm (34) aufweist, die von einem an dem Träger (28) gelenkig angebrachten Drehpunkt (35) divergierend voneinander abstehen; wobei die Arme (33, 34) jeweils freie Enden (36, 37) aufweisen, die mit entsprechenden Kontaktflächen (38, 39) versehen sind, die mit dem Betätigungselement (31) bzw. dem Verschlusselement (14) zusammenwirken.

11. Spülkasten nach einem der Ansprüche 7 bis 10, wobei das Betätigungselement (31), der Hebel (29) und das Verschlusselement (14) derart geformt sind, dass in jeder Stellung, die das Betätigungselement (31) im Gebrauch einnimmt, die Kontaktflächen (45, 46) des Betätigungselements (31) immer in Kontakt mit den jeweiligen Kontaktflächen (38, 18) des Hebels (29) und des Verschlusselements (14) sind; und so, dass die Kontaktflächen (38, 39) des Hebels (29) immer in Kontakt mit den jeweiligen Kontaktflächen (45, 19) des Betätigungselements (31) und des Verschlusselements (14) sind.

12. Spülkasten nach einem der vorhergehenden Ansprüche, wobei die Steuereinheit (26) mit einer drahtlosen Einrichtung zum Datenaustausch mit der Außenwelt versehen ist.

## Revendications

1. Réservoir (1) de chasse comprenant une cuve (3), un robinet de chasse (10) ayant un élément clapet (14) mobile pour ouvrir et fermer sélectivement un trou d'écoulement (6), et un système de commande (2) pour commander le robinet de chasse (10) ; le système de commande (2) comprenant un ensemble d'actionneur (25) coopérant avec l'élément clapet (14) du robinet de chasse (10), une unité de commande (26) commandant l'ensemble d'actionneur (25), et un ensemble de capteurs (27) connecté à l'unité de commande (26) pour envoyer à l'unité de commande (26) des mesures du niveau d'eau dans la cuve (3) ; l'ensemble de capteurs (27) comprenant
un corps de support (51) supportant au moins un capteur de pression (53) configuré pour mesurer un niveau d'eau dans la cuve (3) ; le réservoir de chasse étant **caractérisé en ce que** l'ensemble de capteurs comprend en outre
une paire de capteurs optiques (55, 56) positionnés espacés l'un de l'autre sur le corps de support (51) à des hauteurs différentes par rapport à une paroi du bas (7) de la cuve (3) ; l'unité de commande (26) étant configurée de manière à étalonner le capteur de pression (53) conformément à des données fournies par les capteurs optiques (55, 56).

2. Réservoir de chasse selon la revendication 1, dans lequel les capteurs optiques (55, 56) sont configurés de manière à détecter la présence de liquide dans deux positions spatiales prédéterminées et dans des conditions de fonctionnement de référence respectives ; et l'unité de commande (26) est configurée de manière à étalonner le capteur de pression (53) conformément aux données fournies par les capteurs optiques (55, 56) dans les deux conditions de fonctionnement de référence.

3. Réservoir de chasse selon la revendication 1 ou 2, dans lequel le capteur de pression (53) est positionné à une extrémité axiale supérieure (67a) d'un tuyau (52) supporté par le corps de support (51) et ayant une extrémité axiale inférieure (67b) qui est ouverte et en communication de fluide, lors de son utilisation, avec la cuve (3) ; le capteur de pression (53) étant configuré de manière à détecter la pression d'une colonne de fluide à l'intérieur du tuyau (52) et calculer en conséquence le niveau d'eau dans la cuve (3) .

4. Réservoir de chasse selon la revendication 3, dans lequel le capteur de pression (53) est un capteur de pression différentielle, configuré de manière à mesurer la pression atmosphérique et la pression de la colonne de fluide dans le tuyau (52) et utiliser la différence entre les deux valeurs pour calculer le niveau de liquide dans le réservoir (1).

5. Réservoir de chasse selon la revendication 3 ou 4, dans lequel le corps de support (51) comprend une partie (57) du haut et une partie (58) du bas, positionnées à des extrémités opposées axialement respectives du corps de support (51), et une barre (59) s'étendant entre lesdites parties (57, 58) et constituée de deux secteurs (59a, 59b) articulés l'un à l'autre par une charnière (60) de façon à ce que les deux secteurs (59a, 59b) tournent l'un par rapport à l'autre pour faciliter l'insertion de l'ensemble de capteurs (27) à travers une ouverture d'accès de la cuve (3).

6. Réservoir de chasse selon l'une quelconque des revendications précédentes, dans lequel le premier capteur optique (55) et le capteur de pression (53) sont positionnés au-dessus du niveau de remplissage maximal de la cuve (3), et le deuxième capteur optique (56) est positionné à proximité de la paroi du bas (7) de la cuve (3).

7. Réservoir de chasse selon l'une quelconque des revendications précédentes, dans lequel l'ensemble d'actionneur (25) comprend un support (28), un levier (29) oscillant relié par charnière au support (28), un moteur (30), un actionneur (31) de came mis en place sur un arbre (41) du moteur (30) et tournant d'un seul bloc avec l'arbre (41) et coopérant avec le levier (29) ; et dans lequel le moteur (30) est configuré de manière à faire tourner l'arbre (41) et ainsi l'actionneur (31) dans des directions de rotation opposées, commandées par l'unité de commande (26).

8. Réservoir de chasse selon la revendication 7, dans lequel l'actionneur (31) comprend deux parties de came (43, 44) excentriques par rapport à un axe de rotation (R) de l'arbre (41) et coopérant avec le levier (29) et avec une tête (17) de l'élément clapet (14), respectivement.

9. Réservoir de chasse selon la revendication 7 ou 8, dans lequel l'actionneur (31) est mobile dans une première direction de rotation pour déplacer le levier (29), par contact entre des premières surfaces de contact (45, 38) respectives de l'actionneur (31) et du levier (29), de façon à ce que le levier (29) lève l'élément clapet (14) par contact entre des deuxièmes surfaces de contact (39, 19) respectives du levier (29) et de l'élément clapet (14), ouvrant le robinet de chasse (10) ; et dans une deuxième direction de rotation, opposée à la première direction de rotation, pour déplacer l'élément clapet (14) vers le bas par contact entre des troisièmes surfaces de contact (46, 18) respectives de l'actionneur (31) et de l'élément clapet (14), fermant le robinet de chasse (10).

10. Réservoir de chasse selon l'une quelconque des revendications 7 à 9, dans lequel le levier (29) est sensiblement en forme de C et a un bras (33) supérieur et un bras (34) inférieur faisant saillie de manière divergente l'un par rapport à l'autre à partir d'un pivot (35) relié par charnière au support (28) ; les bras (33, 34) ayant des extrémités libres (36, 37) respectives dotées de surfaces de contact (38, 39) respectives coopérant avec l'actionneur (31) et l'élément clapet (14), respectivement.

11. Réservoir de chasse selon l'une quelconque des revendications 7 à 10, dans lequel l'actionneur (31), le levier (29) et l'élément clapet (14) sont formés de façon à ce que, dans n'importe quelle position prise par l'actionneur (31) lors de son utilisation, les surfaces de contact (45, 46) de l'actionneur (31) soient toujours en contact avec les surfaces de contact (38, 18) respectives du levier (29) et de l'élément clapet (14) ; et de façon à ce que les surfaces de contact (38, 39) du levier (29) soient toujours en contact avec les surfaces de contact (45, 19) respectives de l'actionneur (31) et de l'élément clapet (14) .

12. Réservoir de chasse selon l'une quelconque des revendications précédentes, dans lequel l'unité de commande (26) est dotée d'un dispositif sans fil pour un échange de données avec l'extérieur.
